# EUROPÄISCHE PATENTSCHRIFT

(11) **EP 1 650 630 B1**
(45) Veröffentlichungstag und Bekanntmachung des Hinweises auf die Patenterteilung: **02.02.2011**
(21) Anmeldenummer: 05109758.2
(22) Anmeldetag: 19.10.2005
(51) Int. Cl.: G06F 21/00, H04L 9/00

(54) **Computersystem und Verfahren zur Speicherung von Daten**
Computer system and data storage method
Système informatique et procédé destiné à l'enregistrement de données

(30) Priorität: 20.10.2004 DE 102004051296
(43) Veröffentlichungstag der Anmeldung: 26.04.2006
(73) Patentinhaber: vita-X AG, 56070 Koblenz (DE)
(72) Erfinder: Rodorff, Werner, 64625, Bensheim (DE); Riebling, Jürgen, 65510, Idstein (DE)
(74) Vertreter: Richardt, Markus Albert

(56) Entgegenhaltungen:
- WO-A-97/49211
- WO-A-02/067548
- DE-A1- 19 925 910
- US-A- 4 827 508
- US-A- 5 898 781
- US-A1- 2004 128 535
- BIGET P ET AL: "Extended Memory Card" INTERNET CITATION, [Online] 31. Dezember 1998 (1998-12-31), XP002257108 [gefunden am 2003-09-22]
- LUC BOUGANIM, PHILIPPE PUCHERAL: "Chip-Secured Data Access: Confidential Data on Untrusted Servers" PROCEEDINGS OF THE 28TH VLDB CONFERENCE, 2002, XP002427422 Hong Kong
- WOLFGANG RANKL, WOLFGANG EFFING: "Handbuch der Chipkarten" 2002, CARL HANSER VERLAG , MÜNCHEN, WIEN * Seite 872 *

## Beschreibung

Die Erfindung betrifft ein Computersystem, ein Datenverarbeitungssystem, ein Verfahren zur Speicherung von Daten und ein Verfahren zur Abfrage von Daten sowie entsprechende Computerprogrammprodukte.

Aus dem Stand der Technik sind so genannte Chipkarten bekannt. Chipkarten haben im Allgemeinen eine relativ begrenzte Speicherkapazität. Einen Überblick über vorbekannte Chipkarten gibt "Handbuch der Chipkarten", Wolfgang Rankl, Wolfgang Effing, Carl Hanser Verlag 1999.

Chipkarten werden im medizinischen Bereich als so genannte Patientenkarten eingesetzt. Solche Patientenkarten dienen vor allem zur Speicherung von Name und Wohnort des Patienten sowie der Krankenversicherung, bei der der Patient versichert ist. Die Speicherung weitergehender Daten, wie zum Beispiel digitaler Röntgenbilder oder anderer diagnostischer Daten auf der Chipkarte ist aufgrund der begrenzten Speicherkapazität vorbekannter Chipkarten aus technischen und / oder Kostengründen nicht möglich.

Die EP 0 781 428 B1 schlägt hierzu den Einsatz eines Massenspeichermediums ergänzend zu einer Chipkarte vor. Ein wesentlicher Nachteil dieses Ansatzes ist, dass der Patient neben seiner Chipkarte das Massenspeichermedium, beispielsweise bei einem Arztbesuch, mit sich führen muss. Weitere Anwendungen von Chipkarten für Patientendaten sind aus WO 03/034294 A2, WO 02/07040 A1 und WO 01/06468 A1 bekannt.

Die DE 199 25 910 A1 offenbart ein Verfahren zum Be- oder Verarbeiten von Daten, die in wenigstens einer Datenbank in zumindest teilweise verschlüsselter Form gespeichert werden, wobei die Daten von einem mit der Datenbank über eine Kommunikationsverbindung kommunizierenden Anwender ausgelesen und gegebenenfalls neue Daten gespeichert werden können, wobei die Daten ausschließlich beim Anwender unter Verwendung eines in einer zentralen weiteren Datenbank gespeicherten, ausschließlich an den autorisierten Anwender übermittelbaren Schlüssels entschlüsselt und/oder verschlüsselt werden.

Der Erfindung liegt dem gegenüber die Aufgabe zu Grunde, ein verbessertes Computersystem, Datenverarbeitungssystem, Verfahren zur Speicherung von Daten und Verfahren zur Abfrage von Daten sowie entsprechende Computerprogrammprodukte zu schaffen.

Die der Erfindung zu Grunde liegenden Aufgaben werden jeweils mit den Merkmalen der unabhängigen Patentansprüche gelöst. Bevorzugte Ausführungsformen der Erfindung sind in den abhängigen Patentansprüchen angegeben.

Durch die Erfindung wird ein Computersystem geschaffen, welches ein Lesegerät für einen tragbaren Datenträger zum Lesen eines ersten Schlüssels und eines ersten Zeigers von dem Datenträger aufweist. Das Computersystem hat Mittel zur Verschlüsselung von Daten mit einem zweiten Schlüssel, Mittel zum Versenden der mit dem zweiten Schlüssel verschlüsselten Daten an einen ersten Server, Mittel zum Empfang eines zweiten Zeigers von dem ersten Server als Antwort auf die verschlüsselten Daten, Mittel zur Verschlüsselung des zweiten Schlüssels und des zweiten Zeigers mit dem ersten Schlüssel, und Mittel zum Versenden des mit dem ersten Schlüssel verschlüsselten zweiten Schlüssels und des zweiten Zeigers an einen zweiten Server zur Speicherung des verschlüsselten zweiten Schlüssels und des zweiten Zeigers in einem durch den ersten Zeiger identifizierten Speicherbereich des zweiten Servers.

Die Erfindung ist von besonderem Vorteil, da sie die Schaffung eines Computersystems ermöglicht mit dem auch umfangreiche Datenmengen mit Hilfe eines tragbaren Datenträgers begrenzter Speicherkapazität, wie zum Beispiel einer Chipkarte, gespeichert und abgerufen werden können, wobei gleichzeitig die Daten gegen Manipulation und / oder Ausspähung geschützt werden können.

Vorteilhafterweise kann die vorliegende Erfindung daher zur Speicherung von vertraulichen, insbesondere personenbezogenen Daten, wie zum Beispiel medizinischen Daten, verwendet werden. Insbesondere ermöglicht die Erfindung die Speicherung einer so genannten elektronischen Patientenakte, wobei die zu der Patientenakte gehörenden Massendaten auf einem Datenserver und ein Index auf die elektronische Patientenakte auf einem Verzeichnis-Server gespeichert werden können. Durch diese Trennung des Index und der Massendaten ist einerseits ein besonderer Schutz der Vertraulichkeit der Daten gegeben und andererseits auch eine effiziente Handhabung der anfallenden Datenmengen.

Nach einer Ausführungsform der Erfindung werden zu den Index-Eintragungen auf dem Verzeichnis-Server unverschlüsselte Meta-Informationen gespeichert. Diese Meta-Informationen können deskriptive Angaben zu den einzelnen Eintragungen in der elektronischen Patientenakte beinhalten, so dass nicht in jedem Fall die vollständige Datenmenge heruntergeladen werden muss, sondern eine Auswahl getroffen werden kann.

Nach einer Ausführungsform der Erfindung ist der Datenserver zur Speicherung der Massendaten als so genannter BLOB-Server ausgebildet, das heißt zur Speicherung von so
genannten Binary Large Object (BLOB)-Daten. Dies ist insbesondere dann vorteilhaft, wenn zumindest ein Teil der Daten Bilddaten, wie zum Beispiel digitale Röntgenbilder, Ultraschallaufnahmen oder dergleichen sind.

Im weiteren werden bevorzugte Ausführungsformen der Erfindung mit Bezugnahme auf die Zeichnungen näher erläutert. Es zeigen:
- Figur 1: ein Blockdiagramm einer ersten Ausführungsform eines erfindungsgemäßen Datenverarbeitungssystems,
- Figur 2: ein Flussdiagramm einer bevorzugten Ausführungsform eines erfindungsgemäßen Verfahrens zur Speicherung der Daten,
- Figur 3: ein Flussdiagramm einer bevorzugten Ausführungsform der Erfindung zur Abfrage der Daten,
- Figur 4: ein Blockdiagramm einer Weiterbildung der Ausführungsform der Figur 1,
- Figur 5: ein Flussdiagramm einer Darstellung einer Verwendung einer Chipkarte, insbesondere einer Patientenkarte.

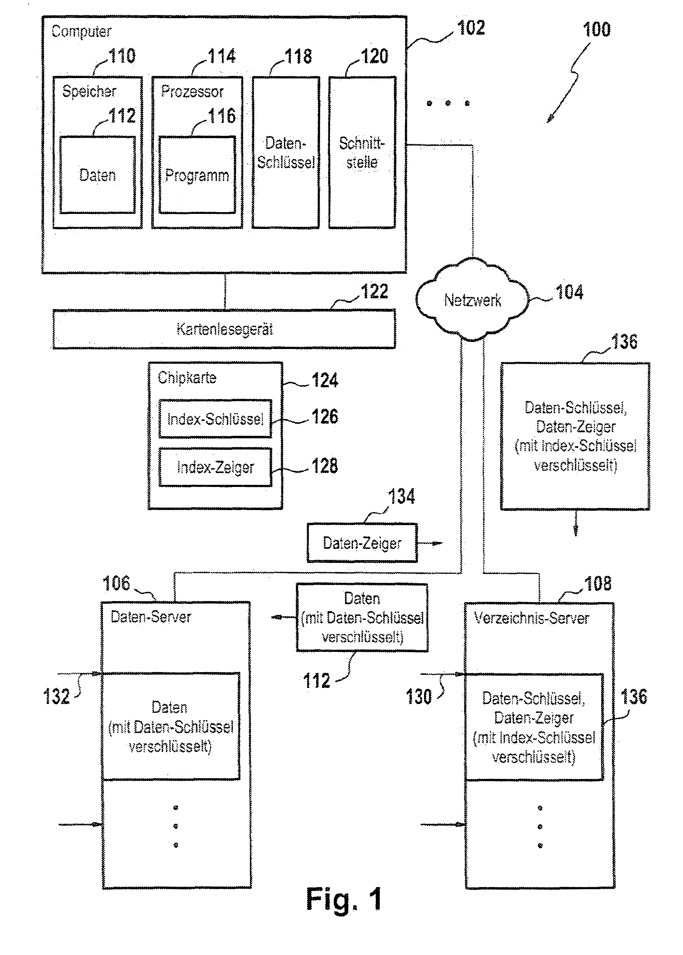

Die Figur 1 zeigt ein Datenverarbeitungssystem 100 mit einem Computer 102, der über ein Netzwerk 104 mit einem Daten-Server 106 und einem Verzeichnis-Server 108 verbindbar ist. Bei dem Netzwerk 104 handelt es sich um ein drahtgebundenes oder drahtloses Telekommunikationsnetzwerk, wie zum Beispiel ein Computernetzwerk, ein Virtual Private Network (VPN), ein Intranet, Extranet oder das Internet.

Der Computer 102 hat einen Speicher 110, wie zum Beispiel einen Arbeitsspeicher, zur Speicherung von Daten 112. Beispielsweise handelt es sich bei den Daten 112 um medizinische Daten eines Patienten, wie zum Beispiel diagnostische Bilddaten, Rezeptdaten, Diagnosen, Befunde etc. Die Daten 112 können beispielsweise von einem behandelnden Arzt in den Computer 102 eingegeben werden.

Alternativ oder zusätzlich ist der Computer 102 mit einem Praxis-EDV-System der Arztpraxis vernetzt und erhält automatisch über das Netzwerk die Daten 112. Ferner ist es auch möglich, in den Computer 102 von einem medizintechnischen Gerät, wie zum Beispiel einem Röntgen-Gerät, Computer-Tomographen, Kernspin-Tomographen oder Ultraschall-Gerät, gelieferte digitale Bilddaten einzuspeisen. Dies kann wiederum automatisch über ein Netzwerk oder durch Einlesen von auf zum Beispiel einer CD-Rom oder DVD gespeicherten Massendaten in den Computer 102 erfolgen. Ferner ist es auch möglich, dass der Computer 102 in ein Gerät integriert ist oder unmittelbar an ein solches Gerät angeschlossen ist, welches die Daten 112 erzeugt.

Der Computer 102 hat zumindest einen Prozessor 114 zur Ausführung eines Programms 116 sowie eine Komponente 118 zur Speicherung und / oder Generierung eines Datenschlüssels. Ferner verfügt der Computer 102 über eine Schnittstelle 120 über die der Computer 102 mit dem Daten-Server 106 und dem Verzeichnis-Server 108 über das Netzwerk 104 kommunizieren kann.

An dem Computer 102 ist ein Kartenlesegerät 122 angeschlossen oder in diesem integriert. Das Kartenlesegerät 122 dient zum Lesen einer Chipkarte 124. Auf der Chipkarte 124 ist ein Index-Schlüssel 126 und ein Index-Zeiger 128 gespeichert. Der Index-Zeiger 128 identifiziert eine Einsprung-Adresse 130 des Verzeichnis-Servers 108 und damit einen Speicherbereich, der der Chipkarte 124 zugewiesen ist. Der Index-Zeiger 128 wird bei der Registrierung des Patienten einmal vergeben und dann auf der Chipkarte 124 gespeichert. Ebenso verhält es sich mit dem Index-Schlüssel 126, der ebenfalls bei der Registrierung des Patienten generiert und auf der Chipkarte 124 persistent gespeichert wird. Der Index-Schlüssel 126 dient zur Verschlüsselung von Index-Einträgen auf dem Verzeichnis-Server 108.

Die Chipkarte 124 ermöglicht die Speicherung einer virtuellen Patientenakte auf dem Daten-Server 106 bzw. eines Index auf die elektronische Patientenakte in dem Verzeichnis-Server 108, wobei auf die elektronische Patientenakte sowohl speichernd als auch lesend nur mit der Chipkarte 124 zugegriffen werden kann.

Zur Speicherung der Daten 112 wird beispielsweise wie folgt vorgegangen:

Die Chipkarte 124 wird in das Kartenlesegerät 122 eingesteckt. Der Computer 102 liest den Index-Schlüssel 126 und den Index-Zeiger 128 von der Chipkarte 124. Ferner wird ein Daten-Schlüssel von der Komponente 118 abgerufen. Vorzugsweise generiert die Komponente 118 einen neuen Daten-Schlüssel für jeden Abruf.

Mit Hilfe des Daten-Schlüssels werden die Daten 112 verschlüsselt und von dem Computer 102 über die Schnittstelle 120 und das Netzwerk 104 an den Daten-Server 106 übertragen. Der Daten-Server 106 speichert die verschlüsselten Daten in einem freien Speicherbereich, der durch eine Einsprung-Adresse 132 identifiziert ist. Vorzugsweise erfolgt die Speicherung der verschlüsselten Daten 112 auf dem Daten-Server 106 so, dass die von dem Daten-Server empfangenen Daten der Reihe nach "übereinander gestapelt" werden. Die Speicherung der Daten auf dem Daten-Server 106 erfolgt also unsortiert und unstrukturiert in der Reihenfolge der eingehenden Daten.

Um dennoch einen späteren Zugriff auf die Daten zu ermöglichen, antwortet der Daten-Server 106 auf die von ihm empfangenen verschlüsselten Daten 112 mit einem Daten-Zeiger 134, der beispielsweise die Einsprung-Adresse 132 angibt, um den Speicherbereich auf dem Daten-Server 106 auf dem die verschlüsselten Daten 112 gespeichert sind zu identifizieren.

Der Daten-Zeiger 134 und der von der Komponente 118 gelieferte Daten-Schlüssel, mit dem die Daten 112 verschlüsselt worden sind, werden dann mit dem Index-Schlüssel 126 verschlüsselt. Der verschlüsselte Daten-Schlüssel und der verschlüsselte Daten-Zeiger werden dann als Index-Eintragung 136 von dem Computer 102 über dessen Schnittstelle 120 und das Netzwerk 104 zu dem Verzeichnis-Server 108 übertragen. Die entsprechende Speicher-Anforderung des Computers 102 an den Verzeichnis-Server 108 zur Speicherung der Index-Eintragung 136 beinhaltet den Index-Zeiger 128 als Parameter. Damit erhält der Verzeichnis-Server 108 eine Angabe darüber, in welchem Speicherbereich die Index-Eintragung 136 gespeichert werden soll, das heißt in dem hier betrachteten Beispielsfall in den Speicherbereich mit der Einsprung-Adresse 130, die durch den Index-Zeiger 128 identifiziert wird.

Im Ergebnis sind also die verschlüsselten Daten 112 auf dem Daten-Server 106 gespeichert und die Index-Eintragung 136, die die für den Zugriff auf die Daten erforderlichen Informationen beinhalten, auf dem Verzeichnis-Server. Der Zugriff auf die auf dem Daten-Server gespeicherten Daten 112 als auch auf die Index-Eintragung 136 des Verzeichnis-Servers 108 ist nur mit Hilfe der Chipkarte 124 möglich.

Zu einem späteren Zeitpunkt können die Daten der Patientenakte zum Beispiel von einem anderen Computer 102 eines anderen behandelnden Arztes, eines Krankenhauses oder einer anderen medizinischen Einrichtung wieder abgerufen werden. Hierzu wird wie folgt vorgegangen:

Die Chipkarte 124 wird in das Kartenlesegerät 122 eingesteckt. Durch das Programm 116 werden der Index-Schlüssel 126 und der Index-Zeiger 128 von der Chipkarte 124 gelesen. Das Programm 116 generiert daraufhin eine Anforderung an den Verzeichnis-Server 108 zur Abfrage der Index-Eintragungen der Patientenakte, die in dem durch den Index-Zeiger 128 identifizierten Speicherbereich des Verzeichnis-Servers 108 gespeichert sind. Hierzu verwendet das Programm 116 den von der Chipkarte 124 gelesenen Index-Zeiger 128.

Der Verzeichnis-Server 108 liefert als Antwort auf die von dem Computer 102 empfangene Anforderung die Index-Eintragungen der Patientenakte, die in dem in der Anforderung des Computers 102 spezifizierten Speicherbereich gespeichert sind, an den Computer 102. Das Programm 116 entschlüsselt dann den oder die Index-Eintragungen 136 mit dem Index-Schlüssel 126. Dadurch erhält das Programm 116 den Daten-Schlüssel und den Daten-Zeiger 134 aus der Index-Eintragung 136 im Klartext zurück.

Mit dem Daten-Zeiger 134 greift das Programm 116 dann über die Schnittstelle 120 und das Netzwerk 104 auf den Daten-Server 106 zu. Der Daten-Server 106 liefert daraufhin die in dem durch den Daten-Zeiger 134 identifizierten Speicherbereich gespeicherten verschlüsselten Daten 112 an den Computer 102 über das Netzwerk 104 zurück. Das Programm 116 entschlüsselt dann die verschlüsselten Daten 112 mit dem Daten-Schlüssel aus der Index-Eintragung 136. Die entschlüsselten Daten 112 werden von dem Programm 116 in dem Speicher 110 gespeichert und beispielsweise auf einem Bildschirm angezeigt.

Vorzugsweise handelt es sich bei der Chipkarte 124 um eine Chipkarte mit einem integrierten Mikroprozessor. In diesem Fall ist es möglich, verschiedene Ver- und Entschlüsselungsfunktionen zumindest teilweise auf der Chipkarte 124 durchzuführen. Insbesondere wird dadurch ermöglicht, dass der Index-Schlüssel 126 nicht aus der Chipkarte 124 ausgelesen werden muss. Vielmehr kann der Index-Schlüssel 126 in einem geschützten Speicherbereich der Chipkarte 124 gespeichert sein, auf den nur der Mikroprozessor der Chipkarte zugreifen kann.

In diesem Fall wird zum Hochladen von Daten wie folgt vorgegangen: Das Programm 116 übergibt den von der Komponente 118 gelieferten Daten-Schlüssel und den Daten-Zeiger 134 an die Chipkarte 124. Der Mikroprozessor der Chipkarte 124 verschlüsselt dann den Daten-Schlüssel und den Daten-Zeiger 134 mit Hilfe des Index-Schlüssels 126 und übergibt den chiffrierten Index-Eintrag 136 an den Computer 102, der diesen an den Verzeichnis-Server 108 schickt. Bei dieser Ausführungsform ist vorteilhaft, dass nur der Index-Zeiger 128, nicht aber der Index-Schlüssel 126 aus der Chipkarte 124 ausgelesen werden muss.

Vorzugsweise wird zusätzlich zu dem verschlüsselten Teil der Index-Eintragung 136 unverschlüsselte Meta-Information zu der Index-Eintragung 136 gespeichert. Die Meta-Information gibt beispielsweise an, auf welche Kategorie von Daten 112 die Index-Eintragung 136 verweist. Beispielsweise gibt die Meta-Information einer Index-Eintragung 136 an, ob es sich um zahnmedizinische, urologische, gynäkologisch oder andere Facharzt spezifische Daten handelt.

Ferner kann die Meta-Information angeben, ob es sich beispielsweise um Rezeptdaten, Diagnosedaten oder Bilddaten handelt.

Die Meta-Informationen ermöglichen es anhand einer Codierung in einem 512-Bit-Feld vor dem Herunterladen der verschlüsselten Daten von dem Daten-Server 106 eine Auswahl der interessierenden Daten zu treffen. Beispielsweise würden in einer Zahnarztpraxis typischerweise nur die Index-Eintragungen 136, die als Meta-Information die Angabe "zahnmedizinische Daten" haben, zum Herunterladen von dem Daten-Server 106 ausgewählt.

Ferner können auch Zugriffsberechtigungen in oder zu einer Index-Eintragung 136 gespeichert werden. Vorzugsweise erfolgt die Abspeicherung von Zugriffsberechtigungen in dem unverschlüsselten Teil der Index-Eintragung 136. Die Zugriffsrechte können in der Index-Eintragung 136 beispielsweise in einem Bit-Feld einer vorgegebenen Länge, von zum Beispiel 512 Bit, gespeichert werden.

Wenn beispielsweise das Bit Nr. 3 des Bit-Feldes auf Eins gesetzt ist, so bedeutet dies, dass alle Ärzte und Zahnärzte auf die Daten, auf welche die Index-Eintragung 136 verweist, zugriffsberechtigt sind. Wenn hingegen das Bit Nr. 4 auf logisch "1" gesetzt ist, so bedeutet dies, dass zwar alle Ärzte, aber nicht Zahnärzte zugriffsberechtigt sind. Wenn das Bit Nr. 5 auf "1" gesetzt ist, so bedeutet dies, dass Apotheken zugriffsberechtigt sind; wenn das Bit Nr. 7 auf "1" gesetzt ist, bedeutet dies, dass nur Zahnärzte zugriffsberechtigt sind etc.

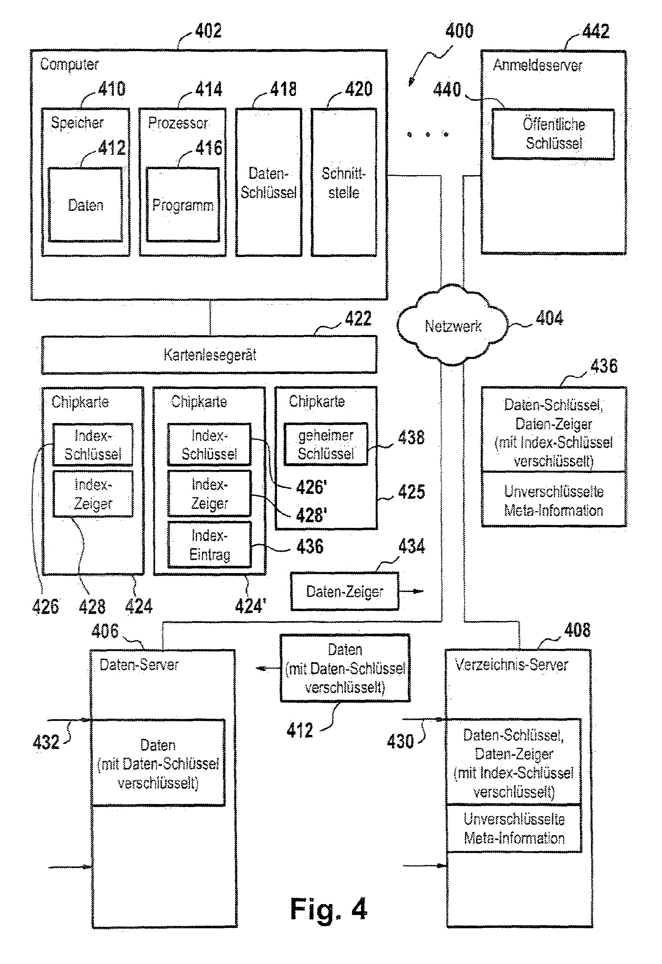

In diesem Fall werden von dem Programm 116 nur diejenigen Index-Eintragungen 136, die für einen Patienten auf dem Verzeichnis-Server 108 abgespeichert sind, zur Auswahl zum Herunterladen von dem Daten-Server 106 angeboten, die der Berechtigung des Benutzers des Computers 102 entsprechen. Die Benutzerrechte des Benutzers des Computers 102 können dabei in dem Computer 102 fest abgespeichert sein; vorzugsweise hat der Benutzer des Computers 102, also zum Beispiel der behandelnde Arzt, eine eigene Chipkarte, die er oder sie zu seiner Authentifizierung und Feststellung seiner Berechtigungen zunächst in das Kartenlesegerät 122 eingeben muss. Eine entsprechende Weiterbildung des Datenverarbeitungssystems 100 der Figur 1 wird weiter unten mit Bezugnahme auf die Figur 4 noch näher erläutert.

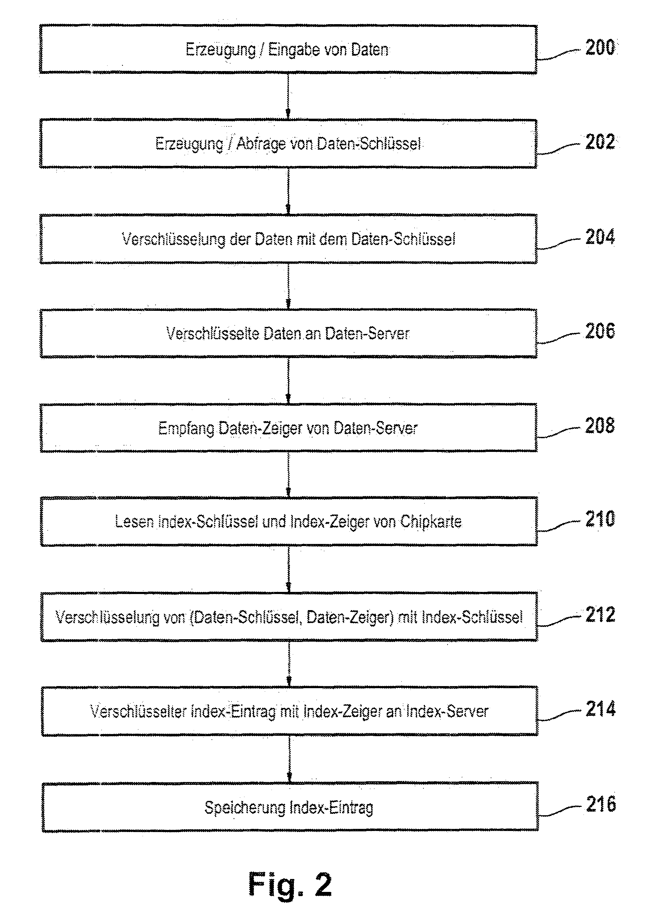

Die Figur 2 zeigt ein entsprechendes Flussdiagramm. In dem Schritt 200 werden die Daten entweder eingegeben oder erzeugt. Beispielsweise erfolgt die Eingabe der Daten manuell von dem behandelnden Arzt oder einer Assistentin; alternativ können die Daten auch von einem Gerät, wie zum Beispiel einem medizintechnischen Gerät erzeugt werden. In dem Schritt 202 wird der Daten-Schlüssel zur Verschlüsselung der in dem Schritt 202 erzeugten oder eingegebenen Daten abgefragt oder generiert. Vorzugsweise handelt es sich bei dem Daten-Schlüssel um einen symmetrischen Schlüssel. Es kann sich jedoch auch um ein asymmetrisches Schlüsselpaar handeln.

In dem Schritt 204 werden die Daten mit dem Daten-Schlüssel verschlüsselt. Für den Fall, dass ein asymmetrisches Verschlüsselungsverfahren eingesetzt wird, erfolgt die Verschlüsselung der Daten mit dem öffentlichen Schlüssel des asymmetrischen Schlüsselpaars.

In dem Schritt 206 werden die verschlüsselten Daten an den Daten-Server geschickt. Daraufhin empfängt der Computer einen Daten-Zeiger von dem Daten-Server, der den Speicherbereich, in dem die Daten auf dem Daten-Server gespeichert worden sind, identifiziert (Schritt 208). In dem Schritt 210 werden ein Index-Schlüssel und ein Index-Zeiger von der Patienten-Chipkarte gelesen. Bei dem Index-Schlüssel handelt es sich vorzugsweise um einen symmetrischen Schlüssel. Es kann sich jedoch auch um ein Schlüsselpaar eines asymmetrischen Verschlüsselungsverfahrens handeln.

In dem Schritt 212 erfolgt die Verschlüsselung des Daten-Schlüssels und des Daten-Zeigers mit dem Index-Schlüssel. Falls ein asymmetrisches Verschlüsselungsverfahren zum Einsatz kommt, erfolgt die Verschlüsselung mit dem öffentlichen Schlüssel des Schlüsselpaars.

Durch die Verschlüsselung des Datenschlüssels und des Daten-Zeigers wird ein Index-Eintrag generiert. Der Index-Eintrag wird an einen Index-Server gesendet, um den Index-Eintrag in einem Speicherbereich des Index-Servers zu speichern, der durch den Index-Zeiger identifiziert wird. In dem Schritt 216 erfolgt die Speicherung der Index-Eintragung auf dem Index-Server.

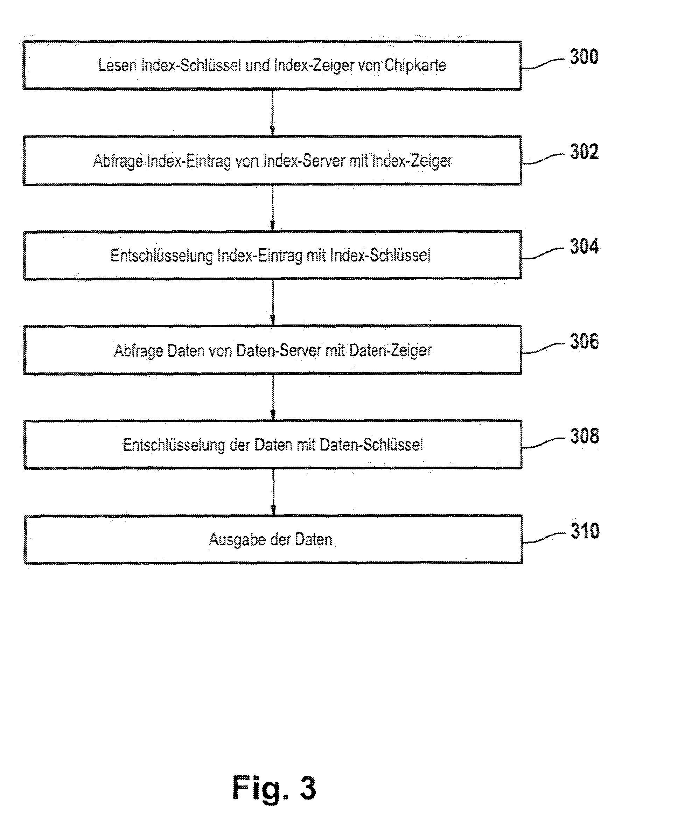

Die Figur 3 zeigt ein Flussdiagramm zur Abfrage von Daten aus der virtuellen elektronischen Patientenakte. In dem Schritt 300 steckt der Patient seine Chipkarte in das Kartenlesegerät des Computers zum Beispiel seines behandelnden Arztes. Der Computer liest dann zumindest den Index-Zeiger oder sowohl den Index-Zeiger und den Index-Schlüssel von der Patienten-Chipkarte. In dem Schritt 302 fragt der Computer den oder die Index-Eintragungen, die auf dem Verzeichnis-Server für den betreffenden Patienten gespeichert sind, mit Hilfe des Index-Zeigers ab. In dem Schritt 304 erfolgt die Entschlüsselung des oder der Index-Eintragungen mit Hilfe des Index-Schlüssels. Diese Entschlüsselung erfolgt je nach Ausführungsform entweder durch die Chipkarte durch den Computer.

Durch die Entschlüsselung erhält der Computer den Daten-Schlüssel und den Daten-Zeiger auf die verschlüsselt auf dem Daten-Server gespeicherten Daten, auf welche die Index-Eintragung verweist. Diese Daten werden mit Hilfe des Daten-Zeigers in dem Schritt 306 von dem Daten-Server abgefragt. Der Computer erhält daraufhin die verschlüsselten Daten von dem Daten-Server. Diese werden mit Hilfe des Daten-Schlüssels entschlüsselt (Schritt 308) und in dem Schritt 310 beispielsweise auf einem Bildschirm des Computers ausgegeben.

Die Figur 4 zeigt eine Weiterbildung des Datenverarbeitungssystems der Figur 1. Elemente der Ausführungsform der Figur 4, die Elementen der Ausführungsform der Figur 1 entsprechen, sind mit entsprechenden Bezugszeichen gekennzeichnet. In der Ausführungsform des Datenverarbeitungssystems 400 der Figur 4 können zwei verschiedene Arten von Patienten-Chipkarten verwendet werden:

Die Chipkarte 424 hat ein relativ kleines Speichervermögen, welches zur Speicherung des Index-Schlüssels 426 und des Index-Zeigers 428 ausreicht. Dagegen hat die Chipkarte 424' eines anderen Patienten einen größeren Speicherbereich, der es ermöglicht, sowohl den Index-Schlüssel 426', den Index-Zeiger 428' und die Index-Eintragung 436 bzw. mehrere Index-Eintragungen der elektronischen Patientenakte auf der Chipkarte 424' zu speichern. Beispielsweise erfolgt die Speicherung von Index-Eintragungen auf der Chipkarte 424' bis der Speicherplatz der Chipkarte 424' erschöpft ist. Zur Speicherung weiterer Eintragungen kann der Verzeichnis-Server verwendet werden.

In dem hier betrachteten Ausführungsbeispiel hat auch der Benutzer des Computers 402, das heißt zum Beispiel der behandelnde Arzt, eine Chipkarte 425. Die Chipkarte 425 dient zur Speicherung eines geheimen Schlüssels 438, zu dem ein öffentlicher Schlüssel 440 gehört. Der öffentliche Schlüssel 440 ist beispielsweise auf einem Anmelde-Server 442 gespeichert. Der Anmelde-Server 442 stellt ein sogenanntes Directory für die Abfrage von öffentlichen Schlüsseln der registrierten Benutzer zur Verfügung sowie weitere Dienste für die Authentifizierung der registrierten Benutzer und der registrierten Patienten bzw. der Chipkarten.

Zusätzlich können die Chipkarten 424, 424' und / oder 425 durch eine PIN oder ein biometrisches Merkmal geschützt sein. Zur Zugriffssicherung mittels einer PIN ist an den Computer 402 ein so genanntes PIN-PAD angeschlossen, über das die PIN der betreffenden Chipkarte eingegeben werden kann. Nur wenn die eingegebene PIN mit der auf der Chipkarte gespeicherten PIN übereinstimmt, wird die Chipkarte zur weiteren Verwendung zugelassen.

Beim Betrieb des Datenverarbeitungssystems 400 steckt der Patient seine Chipkarte 424 bzw. 424' in das Kartenlesegerät 422 ein. Das Programm 416 versucht dann, auf der betreffenden Chipkarte gespeicherte Index-Eintragungen 436 zu lesen. Wenn es sich bei Chipkarte um eine Chipkarte mit geringer Speicherkapazität, das heißt eine Chipkarte 424 handelt, so schlägt der Zugriffsversuch auf den oder die Index-Eintragungen 436 fehl, da diese nicht auf der Chipkarte 424 gespeichert sind. In diesem Fall greift das Programm 416 auf den Verzeichnis-Server 408 zu, um die Index-Eintragungen 436 zu lesen.

Wenn der Patient jedoch Inhaber einer Chipkarte 424' mit größerem Speicherplatz ist, so kann das Programm 416 den oder die Index-Eintragungen 436 unmittelbar von der Chipkarte 424' lesen.

Die auf der Chipkarte 424' gespeicherten Index-Eintragungen 436 können dabei vorzugsweise die verschlüsselten Teile der Index-Eintragung 436 beinhalten.

Vorzugsweise werden bei der Ausführungsform der Figur 4 die Daten 412 vor dem Hochladen auf den Daten-Server 406 und / oder die Index-Eintragung 436 vor dem Hochladen auf den Verzeichnis-Server 408 von dem Benutzer des Computers, das heißt beispielsweise des behandelnden Arztes, digital signiert. Dies erfolgt unter Verwendung des auf der Chipkarte 425 des Benutzers gespeicherten geheimen Schlüssels. In diesem Fall werden die von dem Daten-Server 406 zu einem späteren Zeitpunkt geladenen Daten und / oder die von dem Verzeichnis-Server geladenen Index-Eintragungen 436 mit Hilfe des auf dem Anmelde-Server 442 gespeicherten öffentlichen Schlüssels 440 verifiziert.

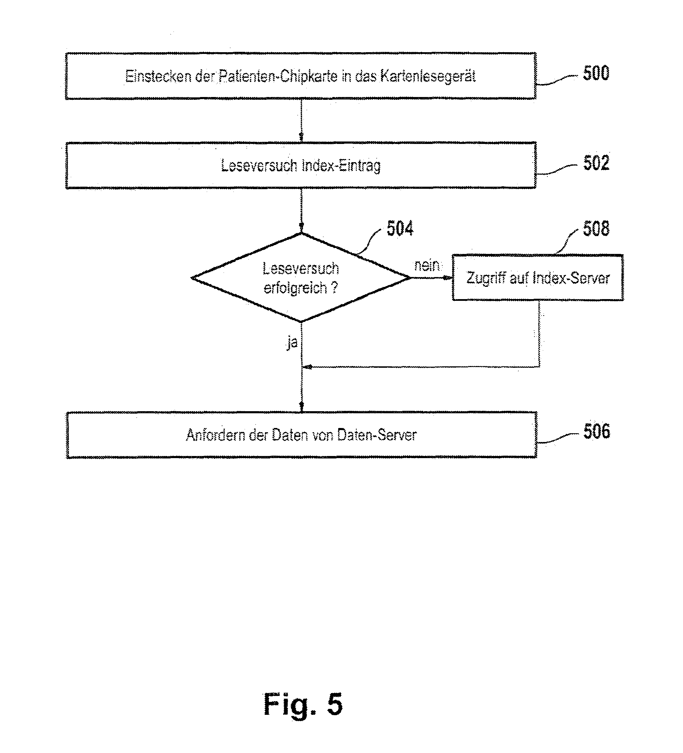

Die Figur 5 zeigt ein Verfahren zur erfindungsgemäßen Verwendung einer Chipkarte, beispielsweise einer Patientenkarte. In dem Schritt 500 wird die Patienten-Chipkarte in das Kartenlesegerät des Computers eingeführt. Danach erfolgt in dem Schritt 502 ein Leseversuch des Computers, um eventuell auf der Patienten-Chipkarte gespeicherte Index-Eintragungen auszulesen. Wenn der Leseversuch erfolgreich verläuft (Schritt 504), werden in dem Schritt 506 die Daten von dem Daten-Server mit Hilfe des Daten-Zeigers bzw. des Daten-Schlüssels aus der Index-Eintragung angefordert bzw. entschlüsselt. War der Leseversuch hingegen nicht erfolgreich, so wird in dem Schritt 508 zunächst auf den Index-Server zugegriffen, um die Index-Eintragungen zu lesen.

Dies ermöglicht die wahlweise Verwendung von kostenoptimierten Chipkarten mit kleinem Speicherplatz und Komfort-Chipkarten mit größerem Speicherplatz.

### Bezugszeichenliste

- 100: Datenverarbeitungssystem
- 102: Computer
- 104: Netzwerk
- 106: Daten-Server
- 108: Verzeichnis-Server
- 110: Speicher
- 112: Daten
- 114: Prozessor
- 116: Programm
- 118: Komponente
- 120: Schnittstelle
- 122: Kartenlesegerät
- 124: Chipkarte
- 126: Index-Schlüssel
- 128: Index-Zeiger
- 130: Einsprung-Adresse
- 132: Einsprung-Adresse
- 134: Daten-Zeiger
- 136: Index-Eintragung
- 400: Datenverarbeitungssystem
- 402: Computer
- 404: Netzwerk
- 406: Daten-Server
- 408: Verzeichnis-Server
- 410: Speicher
- 412: Daten
- 414: Prozessor
- 416: Programm
- 418: Komponente
- 420: Schnittstelle
- 422: Kartenlesegerät
- 424: Chipkarte
- 424': Chipkarte
- 425: Chipkarte
- 426: Index-Schlüssel
- 426': Index-Schlüssel
- 428: Index-Zeiger
- 428': Index-Zeiger
- 430: Einsprung-Adresse
- 432: Einsprung-Adresse
- 434: Daten-Zeiger
- 436: Index-Eintragung
- 438: geheimer Schlüssel
- 440: öffentlicher Schlüssel
- 442: Anmelde-Server

## Patentansprüche

1. Computersystem mit
- einem Lesegerät (122; 422) für einen tragbaren Datenträger (124; 424, 424', 425) zum Lesen eines ersten Schlüssels (126; 426, 426') und eines ersten Zeigers (128; 428, 428') von dem Datenträger,
- Mitteln (114, 116, 118; 414, 416, 418) zur Verschlüsselung von Daten (112; 412) mit einem zweiten Schlüssel,
- Mitteln (120; 420) zum Versenden der mit dem zweiten Schlüssel verschlüsselten Daten an einen ersten Server (106; 406), wobei es sich bei dem ersten Server um einen BLOB-Server zur Speicherung der Daten als verschlüsselte BLOB-Daten "binary large objects" handelt, wobei der erste Server zur Rückgabe einer Einsprungadresse (132) ausgebildet ist, um den Speicherbereich zu identifizieren, auf dem die verschlüsselten BLOB-Daten gespeichert sind,
- Mitteln (120; 420) zum Empfang eines zweiten Zeigers (134; 434) von dem ersten Server als Antwort auf die verschlüsselten Daten (112; 412), wobei der zweite Zeiger die Einsprungadresse auf dem ersten Server identifiziert,
- Mitteln (114, 116; 414, 416) zur Verschlüsselung des zweiten Schlüssels und des zweiten Zeigers mit dem ersten Schlüssel,
- Mitteln (120; 420) zum Senden des mit dem ersten Schlüssel verschlüsselten zweiten Schlüssels und des zweiten Zeigers (136; 436) an einen zweiten Server (108; 408) zur Speicherung in einem durch den ersten Zeiger identifizierten Speicherbereich des zweiten Servers.

2. Computersystem nach Anspruch 1, wobei es sich bei dem tragbaren Datenträger um eine Chipkarte handelt.

3. Computersystem nach einem der Ansprüche 1 oder 2, wobei es sich bei den Daten um medizinische Daten, Texte und/oder Bilddaten handelt.

4. Computersystem zur Abfrage von auf einem ersten Server (106; 406) gespeicherten Daten mit
- einem Lesegerät (122; 422) für einen tragbaren Datenträger (124; 424, 424', 425) zum Lesen eines ersten Schlüssels (126; 426, 426') und eines ersten Zeigers (128; 428, 428') von dem Datenträger,
- Mitteln (114, 116, 120; 414, 416, 420) zur Abfrage eines mit dem ersten Schlüssel verschlüsselten zweiten Schlüssels und eines mit dem ersten Schlüssel verschlüsselten zweiten Zeigers aus einem durch den ersten Zeiger identifizierten Speicherbereich eines zweiten Servers (108; 408),
- Mitteln (114, 116; 414, 416) zur Entschlüsselung des zweiten Schlüssels und des zweiten Zeigers mit dem ersten Schlüssel,
- Mitteln (114, 116, 120; 414, 416, 420) zur Abfrage der verschlüsselt auf einem ersten Server (106; 406) gespeicherten Daten (112; 412) von einem durch den zweiten Zeiger identifizierten Speicherbereich des ersten Servers, wobei es sich bei dem ersten Server um einen BLOB-Server zur Speicherung der Daten als verschlüsselte BLOB-Daten handelt, wobei der erste Server zur Rückgabe einer Einsprungadresse (132) ausgebildet ist, um den Speicherbereich zu identifizieren, auf dem die verschlüsselten BLOB-Daten gespeichert sind,
- Mitteln (114, 116; 414, 416) zur Entschlüsselung der Daten mit dem zweiten Schlüssel.

5. Datenverarbeitungssystem mit zumindest einem Computersystem nach einem der vorhergehenden Ansprüche, wobei der zweite Server zur Speicherung eines Index bestehend aus einem oder mehreren Index-Eintragungen (136; 436) für eine elektronische Patientenakte ausgebildet ist und die zu der Patientenakte gehörenden Massendaten (112; 412) verschlüsselt auf dem ersten Server gespeichert sind.

6. Datenverarbeitungssystem nach Anspruch 5, wobei dem zweiten Server mehrere erste Zeiger zugeordnet sind, wobei jeder der ersten Zeiger einen einer Chipkarte zugeordneten Speicherbereich identifiziert.

7. Verfahren zur Speicherung von Daten mit folgenden Schritten:
- Lesen eines ersten Schlüssels (126; 426) und eines ersten Zeigers (128; 428) von einem tragbaren. Datenträger (124; 424, 424'),
- Verschlüsselung von Daten (112; 412) mit einem zweiten Schlüssel,
- Versendung der mit dem zweiten Schlüssel verschlüsselten Daten an einen ersten Server (106; 406), wobei es sich bei dem ersten Server um einen BLOB-Server zur Speicherung der Daten als verschlüsselte BLOB-Daten handelt,
- Rückgabe einer Einsprungadresse (132), um den Speicherbereich des ersten Servers zu identifizieren, auf dem die verschlüsselten BLOB-Daten gespeichert sind,
- Empfang eines zweiten Zeigers (134; 434) von dem ersten Server als Antwort auf die verschlüsselten Daten, wobei der zweite Zeiger die Einsprungadresse auf dem ersten Server identifiziert,
- Verschlüsselung des zweiten Schlüssels und des zweiten Zeigers mit dem ersten Schlüssel,
- Versenden des mit dem ersten Schlüssel verschlüsselten zweiten Schlüssels und des mit dem ersten Schlüssel verschlüsselten zweiten Zeigers an einen zweiten Server (108; 408) zur Speicherung in einem durch den ersten Zeiger identifizierten Speicherbereich des zweiten Servers.

8. Verfahren nach Anspruch 7, wobei die Daten mit Hilfe eines medizintechnischen Geräts erfasst werden.

9. Verfahren zur Abfrage von auf einem ersten Server (106; 406) gespeicherten Daten (112; 412), wobei der erste Server als BLOB-Server zur Speicherung der Daten als verschlüsselte BLOB-Daten ausgebildet ist, mit folgenden Schritten:
- Lesen eines ersten Schlüssels (126; 426, 426') und eines ersten Zeigers (128; 428, 428') von einem tragbaren Datenträger (124; 424, 424'),
- Abfrage eines mit dem ersten Schlüssel verschlüsselten zweiten Schlüssels und eines mit dem ersten Schlüssel verschlüsselten zweiten Zeigers aus einem durch den ersten Zeiger identifizierten Speicherbereich eines zweiten Servers (108; 408), wobei der erste Zeiger eine Einsprungadresse auf dem zweiten Server identifiziert,
- Entschlüsselung des zweiten Schlüssels und des zweiten Zeigers mit dem ersten Schlüssel,
- Abfrage der verschlüsselt auf dem ersten Server gespeicherten Daten aus einem durch den zweiten Zeiger identifizierten Speicherbereich des ersten Servers, wobei der zweite Zeiger eine Einsprungadresse auf dem ersten Server identifiziert, auf dem die verschlüsselten Daten gespeichert sind,
- Entschlüsselung der verschlüsselten Daten mit dem zweiten Schlüssel.

10. Computerprogrammprodukt mit von einem Computer ausführbaren Instruktionen zur Durchführung der Verfahrensschritte 7 bis 9.

## Claims

1. Computer system having
- a reader (122; 422) for a portable data storage medium (124; 424, 424', 425) for the purpose of reading a first key (126; 426, 426') and a first pointer (128; 428, 428') from the data storage medium,
- means (114, 116, 118; 414, 416, 418) for encrypting data (112; 412) using a second key,
- means (120; 420) for sending the data encrypted using the second key to a first server (106; 406), wherein the first server is a BLOB server for storing the data as encrypted BLOB data "binary large objects", wherein the first server is designed to return an entry address (132) in order to identify the memory area on which the encrypted BLOB data are stored,
- means (120; 420) for receiving a second pointer (134; 434) from the first server in response to the encrypted data (112; 412), wherein the second pointer identifies the entry address on the first server,
- means (114, 116; 414, 416) for encrypting the second key and the second pointer using the first key,
- means (120; 420) for sending the second key, encrypted using the first key, and the second pointer (136; 436) to a second server (108; 408) for the purpose of storage in a memory area of the second server which is identified by the first pointer.

2. Computer system according to Claim 1, wherein the portable data storage medium is a chip card.

3. Computer system according to one of Claims 1 and 2, wherein the data are medical data, text and/or image data.

4. Computer system for requesting data stored on a first server (106; 406), having
- a reader (122; 422) for a portable data storage medium (124; 424, 424', 425) for the purpose of reading a first key (126; 426, 426') and a first pointer (128; 428, 428') from the data storage medium,
- means (114, 116, 120; 414, 416, 420) for requesting a second key, encrypted using the first key, and a second pointer, encrypted using the first key, from a memory area of a second server (108; 408) which is identified by the first pointer,
- means (114, 116; 414, 416) for decrypting the second key and the second pointer using the first key,
- means (114, 116, 120; 414, 416, 420) for requesting the data (112; 412) stored in encrypted form on a first server (106; 406) from a memory area of the first server which is identified by the second pointer, wherein the first server is a BLOB server for storing the data as encrypted BLOB data, wherein the first server is designed to return an entry address (132) in order to identify the memory area on which the encrypted BLOB data are stored,
- means (114, 116; 414, 416) for decrypting the data using the second key.

5. Data processing system having at least one computer system according to one of the preceding claims, wherein the second server is designed to store an index comprising one or more index entries (136; 436) for an electronic patient record, and the bulk data (112; 412) associated with the patient record are stored in encrypted form on the first server.

6. Data processing system according to Claim 5, wherein the second server has a plurality of associated first pointers, wherein each of the first pointers identifies a memory area associated with a chip card.

7. Method for storing data, having the following steps:
- a first key (126; 426) and a first pointer (128; 428) are read from a portable data storage medium (124; 424, 424'),
- data (112; 412) are encrypted using a second key,
- the data encrypted using the second key are sent to a first server (106; 406), said first server being a BLOB server for storing the data as encrypted BLOB data,
- an entry address (132) is returned in order to identify the memory area of the first server on which the encrypted BLOB data are stored,
- a second pointer (134; 434) is received from the first server in response to the encrypted data, wherein the second pointer identifies the entry address on the first server,
- the second key and the second pointer are encrypted using the first key,
- the second key, encrypted using the first key, and the second pointer, encrypted using the first key, are sent to a second server (108; 408) for the purpose of storage in a memory area of the second server which is identified by the first pointer.

8. Method according to Claim 7, wherein the data are captured using a technical medical appliance.

9. Method for requesting data (112; 412) stored on a first server (106; 406), wherein the first server is in the form of a BLOB server for storing the data as encrypted BLOB data, having the following steps:
- a first key (126; 426, 426') and a first pointer (128; 428, 428') are read from a portable data storage medium (124; 424, 424'),
- a second key, encrypted using the first key, and a second pointer, encrypted using the first key, are requested from a memory area of a second server (108; 408) which is identified by the first pointer, wherein the first pointer identifies an entry address on the second server,
- the second key and the second pointer are encrypted using the first key,
- the data stored in encrypted form on the first server are requested from a memory area of the first server which is identified by the second pointer, wherein the second pointer identifies an entry address on the first server at which the encrypted data are stored,
- the encrypted data are decrypted using the second key.

10. Computer program product having computer-executable instructions for carrying out method steps 7 to 9.

## Revendications

1. Système informatique comprenant :
- un lecteur (122 ; 422) pour un support de données (124 ; 424, 424', 425) portable pour la lecture d'une première clé (126 ; 426 , 426') et d'un premier pointeur (128' ; 428, 428') depuis le support de données,
- des moyens (114, 116, 118 ; 414, 416, 418) pour crypter des données (112 ; 412) avec une deuxième clé,
- des moyens (120 ; 420) pour envoyer les données cryptées avec la deuxième clé à un premier serveur (106 ; 406), le premier serveur étant un serveur BLOB destiné à enregistrer les données sous la forme de données BLOB (Binary Large Objects - Grands objets binaires) cryptées, le premier serveur étant conçu pour renvoyer une adresse d'entrée (132) afin d'identifier la zone de mémoire sur laquelle sont enregistrées les données BLOB cryptées,
- des moyens (120 ; 420) pour recevoir un deuxième pointeur (134, 434) du premier serveur en tant que réponse aux données (112 ; 412) cryptées, le deuxième pointeur identifiant l'adresse d'entrée sur le premier serveur,
- des moyens (114, 116 ; 414, 416) pour crypter la deuxième clé et le deuxième pointeur avec la première clé,
- des moyens (120 ; 420) pour envoyer la deuxième clé cryptée avec la première clé et le deuxième pointeur (136 ; 436) à un deuxième serveur (108 ; 408) en vue de leur enregistrement dans une zone de mémoire du deuxième serveur identifiée par le premier pointeur.

2. Système informatique selon la revendication 1, le support de données portable étant une carte à puce.

3. Système informatique selon l'une des revendications 1 ou 2, les données étant des données médicales, des textes et/ou des données d'image.

4. Système informatique pour interroger des données enregistrées sur un premier serveur (106 ; 406) comprenant :
- un lecteur (122 ; 422) pour un support de données (124 ; 424, 424', 425) portable pour la lecture d'une première clé (126 ; 426 , 426') et d'un premier pointeur (128' ; 428, 428') depuis le support de données,
- des moyens (114, 116, 120 ; 414, 416, 420) pour interroger une deuxième clé cryptée avec la première clé et un deuxième pointeur crypté avec la première clé depuis une zone de mémoire d'un deuxième serveur (108 ; 408) identifiée par le premier pointeur,
- des moyens (114, 116 ; 414, 416) pour décrypter la deuxième clé et le deuxième pointeur avec la première clé,
- des moyens (114, 116, 120 ; 414, 416, 420) pour interroger les données (112 ; 412) cryptées enregistrées sur un premier serveur (106 ; 406) d'une zone de mémoire du premier serveur identifiée par le deuxième pointeur, le premier serveur étant un serveur BLOB destiné à enregistrer les données sous la forme de données BLOB cryptées, le premier serveur étant conçu pour renvoyer une adresse d'entrée (132) afin d'identifier la zone de mémoire sur laquelle sont enregistrées les données BLOB cryptées,
- des moyens (114, 116 ; 414, 416) pour décrypter les données avec la deuxième clé.

5. Système de traitement de données comprenant au moins un système informatique selon l'une des revendications précédentes, le deuxième serveur étant conçu pour enregistrer un index composé d'une ou de plusieurs entrées d'index (136 ; 436) pour un dossier de patient électronique et les données en masse (112 ; 412) appartenant au dossier de patient étant enregistrées cryptées sur le premier serveur.

6. Système de traitement de données selon la revendication 5, plusieurs premiers pointeurs étant associés au deuxième serveur, chacun des premiers pointeurs identifiant une zone de mémoire associée à une carte à puce.

7. Procédé d'enregistrement de données comprenant les étapes suivantes :
- Lecture d'une première clé (126 ; 426) et d'un premier pointeur (128 ; 428) depuis un support de données (124 ; 424, 424') portable,
- Cryptage de données (112 ; 412) avec une deuxième clé,
- Envoi des données cryptées avec la deuxième clé à un premier serveur (106 ; 406), le premier serveur étant un serveur BLOB destiné à enregistrer les données sous la forme de données BLOB cryptées,
- Renvoi d'une adresse d'entrée (132) afin d'identifier la zone de mémoire du premier serveur sur laquelle sont enregistrées les données BLOB cryptées,
- Réception d'un deuxième pointeur (134 ; 434) du premier serveur en tant que réponse aux données cryptées, le deuxième pointeur identifiant l'adresse d'entrée sur le premier serveur,
- Cryptage de la deuxième clé et du deuxième pointeur avec la première clé,
- Envoi de la deuxième clé cryptée avec la première clé et du deuxième pointeur crypté avec la première clé à un deuxième serveur (108 ; 408) en vue de leur enregistrement dans une zone de mémoire du deuxième serveur identifiée par le premier pointeur.

8. Procédé selon la revendication 7, les données étant acquises à l'aide d'un appareil technique médical.

9. Procédé pour interroger des données (112 ; 412) enregistrées sur un premier serveur (106 ; 406), le premier serveur étant réalisé sous la forme d'un serveur BLOB destiné à enregistrer les données sous la forme de données BLOB cryptées comprenant les étapes suivantes:
- Lecture d'une première clé (126 ; 426, 426') et d'un premier pointeur (128 ; 428, 428') depuis un support de données (124 ; 424, 424') portable ,
- Interrogation d'une deuxième clé cryptée avec la première clé et d'un deuxième pointeur crypté avec la première clé depuis une zone de mémoire d'un deuxième serveur (108 ; 408) identifiée par le premier pointeur, le premier pointeur identifiant une adresse d'entrée sur le deuxième serveur,
- Décryptage de la deuxième clé et du deuxième pointeur avec la première clé,
- Interrogation des données cryptées enregistrées sur le premier serveur d'une zone de mémoire du premier serveur identifiée par le deuxième pointeur, le deuxième pointeur identifiant une adresse d'entrée sur le premier serveur sur laquelle sont enregistrées les données cryptées,
- Décryptage des données cryptées avec la deuxième clé.

10. Produit de programme informatique avec des instructions exécutables par un ordinateur pour mettre en oeuvre les étapes 7 à 9 du procédé.
